# EUROPEAN PATENT SPECIFICATION

(11) **EP 3 040 263 B1**
(45) Date of publication and mention of the grant of the patent: **20.12.2017**
(21) Application number: 14382578.4
(22) Date of filing: 29.12.2014
(51) Int. Cl.: B64C 1/06, B64C 1/12, B64D 41/00

(54) **Tail cone of an aircraft**
Heckkonus eines Flugzeugs
Cône de queue d'un aéronef

(43) Date of publication of application: 06.07.2016
(73) Proprietor: Airbus Operations S.L., 28902 Madrid (ES)
(72) Inventor: Arévalo Rodriguez, Elena, 28902 Getafe, Madrid (ES)
(74) Representative: Elzaburu S.L.P.

(56) References cited:
- EP-A1- 2 634 086
- WO-A1-2008/000286
- WO-A2-02/40347
- US-A1- 2008 111 024
- US-A1- 2012 282 441
- The'roel Al Azhar: "Aircraft structures", , 20 April 2014 (2014-04-20), pages 2-48, XP055192199, Retrieved from the Internet: URL:http://www.slideshare.net/nasrulazhar/ aircraft-structures-33729034 [retrieved on 2015-05-28]

## Description

### Field of the invention

The present invention refers to a tail cone of an aircraft. More specifically it refers to a tail cone made of composite materials.

### Background of the invention

A known tail cone comprises longitudinal structural members, transversal structural members and a skin.

The skin is internally reinforced with said longitudinal and transversal structural members such that said structural members are located on the inner face of the skin. Stringers, beams and frames can be mechanically attached to the skin or optionally stringers can be cocured to the skin while the other elements are riveted to the skin.

The skin has to fulfill two different conditions, firstly to support structural loads mainly derived from the attachment of the auxiliary power system APS which is attached to the structure of the compartment usually through struts extending between the auxiliary power system and strong points in the structure corresponding to frames-beams crossings. Additionally the skin has to be configured to support aerdynamic loads by having a geometry with a low resistance to the said aerodynamic loads.

The longitudinal structural members, for instance, stringers and beams, are located in the longitudinal direction of the tail cone, taking the flight direction as longitudinal direction. More specifically, beams reinforce cut outs or areas in which local loads are introduced.

The transversal structural members, such as frames, are located transversal to the longitudinal direction of the tail cone.

Both elements, longitudinal and tranversal, intersect each other in two types of intersections:
- Intersections between stringers and frame in which both elements are kept continuous and furthermore frames have holes, called mouseholes, for allowing the stringers to pass through them.
- Intersections between beams and frames in which one of the two elements must be ended at the intersection so that the other element can be kept continuous, being both elemens further joined with auxiliary joining parts.

Manufacturing the previously mentioned structural elements and assembling them to the skin, including all the intersections between frames and beams is a difficult and time consuming task and in addition said intersections between longitudinal and transversal elements increase the weight of the structure because auxiliary joining parts have to be provided. WO 02/40347 A2 discloses a system for supporting an auxiliary power unit in an aircraft tail cone wherein the auxiliary power unit is supported by a focalized suspension system supporting the power unit, the focalized suspension system having a plurality of support means each having a line of action, the lines of action intersecting at the focal point.

### Summary of the invention

The aim of the invention is to simplify the above mentioned structure of the tail cone in order to make it easy to manufacture and assemble and to increase the structural efficiency of the tail cone.

The claimed invention is characterised in that the tail cone comprises:
- an internal skin,
- an external skin which surrounds the internal skin,
- longitudinal structural members located on the inner face of the internal skin in the longitudinal direction of the tail cone, and
- frames located between the external skin and the internal skin in the transverse direction of the tail cone.

The problem previously mentioned in the background of the invention related to intersections between longitudinal and transversal structural elements has been solved by providing two skins, an internal skin and an external skin and also providing the longitudinal structural elements on the inner face of the internal skin and the transversal structural elements on the outer face of said internal skin or in other words between the internal and the external skins. Said configuration eliminates the crossing between longitudinal and transversal structural elements.

Another objective of the claimed configuration is to ease the manufacturing process of the internal skin and the reinforcing elements. Since the internal skin doesn't have to fulfil aerodynamic constraints its cross section could be designed to be manufactured more easily in order to save time and cost, for instance, having flat walls in order to make its manufacturing process easier and cheaper. Additionally, the head of the frames, that are attached to the internal skin, is also straight while the foot of the frames follows the shape of the external skin, as a consequence, the foot and the head of the frames are not parallel. In addition, the frame can be made in portions that are assembled afterwards forming the whole frame. Consequently as the head of the frames is straight and the frames can be manufactured in parts, the manufacturing process is simplified.

Moreover, the tail cone is manufactured such that its ability to support loads coming from the attachment of the auxiliary power system APS is increased. This is due because said attachment can be made to a strong point, that is, to a reinforced region corresponding to the join of a frame, a beam and the internal skin.

On the other hand, the external skin could be suitable for supporting aerodynamic loads or additionally it can also be designed both for withstanding aerodynamic and structural loads providing more flexibility to the tail cone.

A further additional advantage is that in case of impacts during handling operations, the replacement or repair of said external skin can be quickly done because it is joined to less number of structural members, mainly to the transversal structural members and, in some configurations, to some longitudinal structural members. Moreover when the external skin is joined by reversible means, the assembly and disassembly is eased and a reduction of the hours of the aircraft on ground is achieved. Additionally, in an embodiment having a frame splitted into sections in case of impacts that damage a portion of the frame, only the damaged section needs to be replaced instead of the whole frame.

Additionally, routing for electrical system, lights, could be placed between the internal skin and the external skin, without fireproof requirements because they would be located out of the compartment in which fire can arise.

In summary, the weight is optimized, the manufacturing method is simplified and the number of parts is reduced.

It is also an object of the claimed invention a manufacturing method of a tail cone that comprises the following steps:
- providing an internal skin,
- locating longitudinal structural members on the inner face of the internal skin in the longitudinal direction of the tail cone, and
- locating frames on the ourter face of the internal skin in the transverse direction of the tail cone,
- providing afterwards an external skin surrounding the frames, and
- attaching the external skin to the frames or to the internal skin.

It is also an object of the claimed invention an aircraft that comprises a tail cone according to the preceding technical features.

### Description of the figures

To complete the description and in order to provide for a better understanding of the invention, a set of drawings is provided. Said drawings form an integral part of the description and illustrate preferred embodiments of the invention. The drawings comprise the following figures:
Figure 1 is a schematic perspective view of a tail cone of the state of the art.
Figure 2 is a schematic view of a cross section of an embodiment of the tail cone.
Figure 3 is a schematic perspective view of the embodiment of the tail cone corresponding to Figure 2.
Figure 4a is a schematic view of a cross section of the struts supporting the auxiliary power system of the state of the art.
Figure 4b is a schematic view of a cross section of an embodiment of the invention showing the attachment of the struts supporting the auxiliary power system to the fuselage structure.
Figure 5a is a schematic view of a cross section of an additional embodiment of the invention showing the attachment of the struts supporting the auxiliary power system to the fuselage structure.
Figure 5b shows a detail of the attachment of the auxiliary power system disclosed in Figure 5a.

### Detailed description of the invention

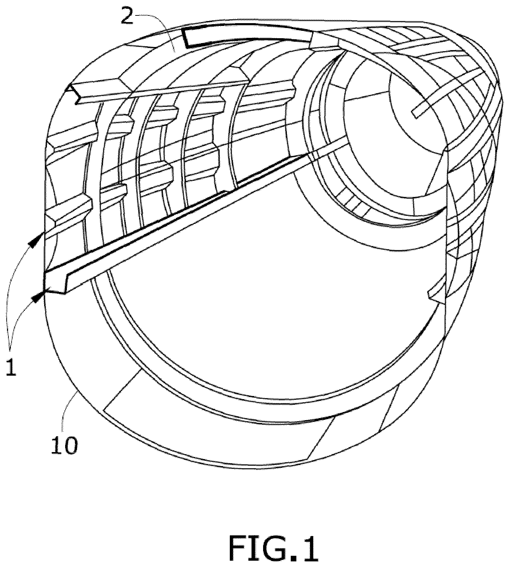

Figure 1 shows a known tail cone comprising:
- a skin (10),
- longitudinal structural members (1) located in the longitudinal direction of the tail cone and attached to the inner face of the skin (10), and
- transversal structural members (2) located in the transverse direction of the tail cone and also attached to the inner face of the skin (10).

The longitudinal structural members (1) shown in the figures are stringers (6) and beams (5) while the transversal structural members (2) mainly consist of frames (2). The stringers (6) could be omega or T shaped, and the beams (5) could have a C, J or H cross-section. Said stringers (6) and beams (5) have intersections with the frames (2) as explained in the background of invention. Said elements are made of carbon fiber reinforced polymer.

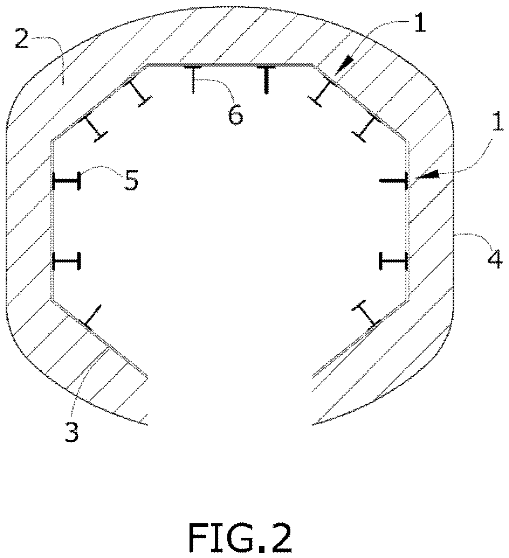

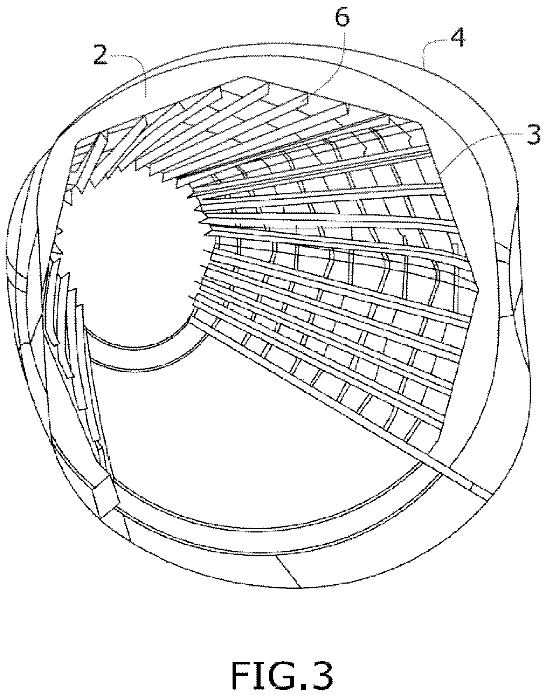

Figures 2 and 3 show an embodiment of the claimed tail cone made of composite material wherein the transversal structural members (2) are located between the external skin (4) and the internal skin (3). Additionally, the longitudinal structural members (1) are located on the inner face of the internal skin (3).

As frames (2) are placed on the outer face of the internal skin (3) and stringers (6) and beams (5) on the inner face of the internal skin (3), no intersections exist between frames (2) and stringers (6) or beams (5), therefore the manufacturing process is easier as no cut outs (mouseholes) have to be made. Moreover, the head of the frames (2) is straight and the frames (2) can be manufactured in parts. Not having said cut outs provide the additional advantage of increasing the structural efficiency of the frames (2). Additionally, as the auxiliary joining parts between frames (2) and beams (5) are avoided, the number of parts is reduced implying recurring costs and weight savings.

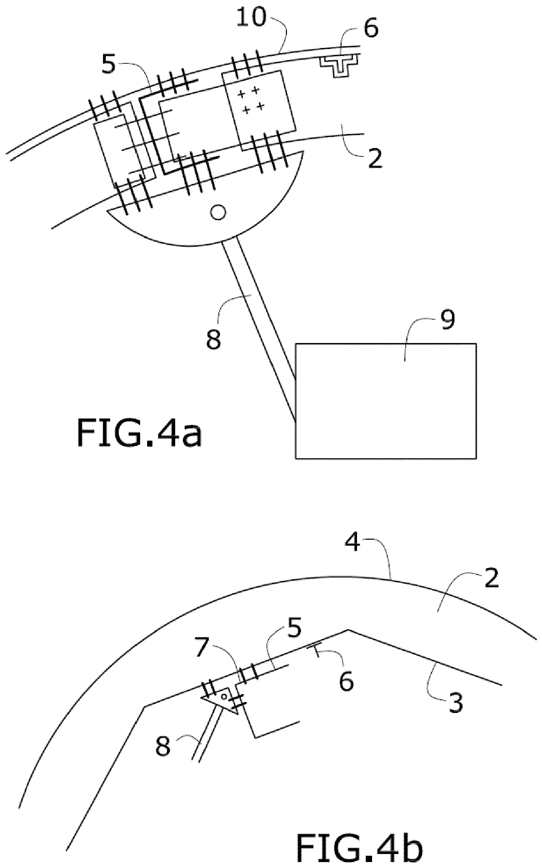

An additional advantage is that, in the the state of the art, as frames (2) and beams (5) cross each other, the means for supporting the auxiliary power system APS (9), that are struts (8) in the shown embodiment, are joined in a complex way, by means of a high number of pieces, at frame (2) - beam (5) intersections as shown in Figure 4a while in the claimed configuration these struts (8) supporting the auxiliary power system (9) are joined to strong points in the structure formed by the internal skin (3), the foot (7) and the web of the beam (5). Said strong points are accessible due to frames (2) are located in the opposite face of the internal skin (3), that leading to a simpler attachment of the APS (9) as can be seen in Figure 4b.

The internal skin (3) doesn't have to fulfil aerodynamic constraints, therefore the internal skin (3) could be designed having flat walls in order to smooth its manufacturing process.

An additional advantage is that as the head of the frame (2) follows the contour of the internal skin (3), it also has a flat contour making easier its manufacturing process. Moreover, this structural configuration allows the transversal structural members (2) to be easily divided into sections, each section comprising a portion of the head, a portion of the foot and the web of the transversal structural member (2). Afterwards, those sections can be joined by joining parts such that continuity to the web, the head including the inner skin and the foot of the frame (6) is provided.

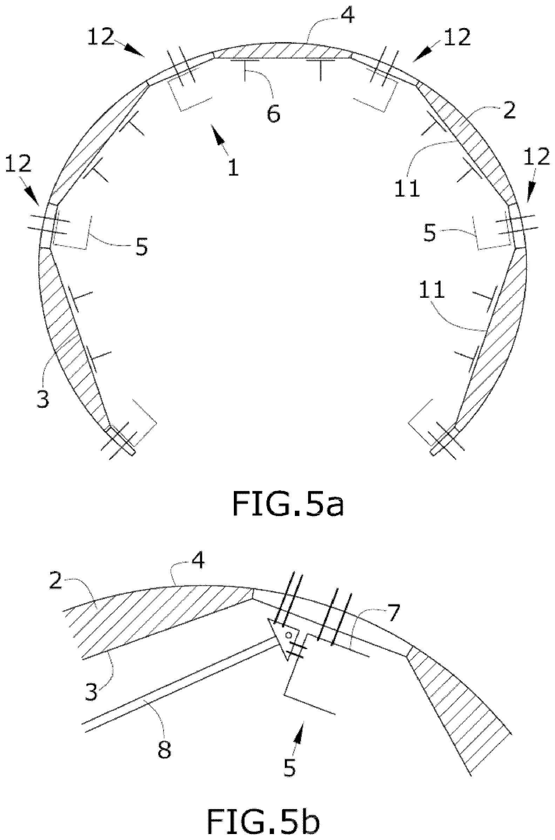

Figures 5 disclose another embodiment in which the frame (2) is also divided into sections (11) that are separated and extend between consecutive points (12) in which the external (4) and the internal skin (3) are joined. Therefore the frame (2) is not continuous and it comprises several independent sections (11) and the internal (3) and external (4) skin are joined at intervals. The beams (5) are located in the points wherein the internal (3) and external (4) skin are joined.

Again, Figure 5b shows that the struts (8) supporting the auxiliary power system (9) are joined to strong points in the structure formed by the internal skin (3), the foot (7) and the web of the beam (5).

Another advantage of having flat walls is that the internal skin (3) can be designed only noting the structural loads and not the aerodynamic loads, therefore the inner structure can be designed in a simpler way to withstand these structural loads.

As previously stated, the external skin (4) could be suitable for supporting aerodynamic loads or additionally it can also be designed both for withstanding aerodynamic and structural loads. When the external skin (4) only fulfils aerodynamic conditions, as the internal skin (3) has a smaller diameter than a conventional skin (10), a more robust internal skin (3) would be advisable, to the contrary, the external skin (4) can also be prepared to support structural loads.

In order to improve the transfer of loads in the internal skin (3) the transition between adjacent flat walls is made through rounded corners better than through angled corners. Additionally, the skin thickness at the transition zone between consecutive flat walls could be increased.

Thus, the manufacturing method of the embodiment shown in the figures comprises the following steps:
- providing an internal skin (3),
- locating longitudinal structural members (1) on the inner face of the internal skin (3) in the longitudinal direction of the tail cone, and
- locating transversal structural members (2) on the ourter face of the internal skin (3) in the transverse direction of the tail cone,
- providing afterwards an external skin (4) surrounding the transversal structural members (2), and
- attaching the external skin (4) to the transversal structural members (2) or to the internal skin (3) depending of the embodiment.

In the embodiment shown in Figures 2 and 4, the external skin (4) is attached to the transversal structural members (2), ie, to the frames while in the embodiment shown in Figures 5 the external skin (4) is attached to the longitudinal structural members (2) and to the internal skin (3) in the points in which the internal (3) and the external (4) skin are joined and there is not transversal structural member (2) inbetween.

Said structure can be an integrated structure, that it is to say, an structure in which stringers (6), beams (5), frames (2) and the internal skin (3) are hot formed and afterwards are cocured together in their final position, therefore said internal part can be manufactured in a single piece as a single process known as one shot process, with the appropiate tooling inside and outside the internal skin (3). Afterwards, the external skin (4) is attached to the previous structure.

As previously stated, the external skin (4) could have an structural behaviour or only a aerodynamic function like a fairing. In both cases, said external skin (4) is mechanically attached to the transversal structural members (2) or to the internal skin (3). If the external skin (4) has an structural duty the attachment would be done by rivets and if the external skin (4) fulfills only an aerodynamic objective the attachment would be done by reversible fastening means. Additionally in case of having a non structural external skin (4) the detachment of said skin (4) would be done more easily thanks to said reversible fastening means.

It is also an object of the claimed invention an aircraft that comprises a tail cone according to the preceding technical features.

With the claimed invention auxiliary joining parts between longitudinal and transversal structural members are avoided, first of all between frames (2) and beams (5) this reducing the number of parts and the total weight. Secondly between frames (2) and stringers (6) avoding the need to have cutouts into the frames (2) for allowing continuous stringers (5) this, together with the straight head of the frames and the split into pieces, simplifying the manufacturing process of the frame (2). Because of the need to perform mouseholes is avoided, frame section is not interrupted, and therefore frame structural efficiency is increased, additionally allowing a decrease into the height of the frame.

Additionally, the internal skin (3) can also accomplish with the fireproof requirements.

## Claims

1. Tail cone of an aircraft **characterised in that** it comprises:
- an internal skin (3),
- an external skin (4) which surrounds the internal skin (3),
- longitudinal structural members (1) located on the inner face of the internal skin (3) in the longitudinal direction of the tail cone, and
- frames (2) located between the external skin (4) and the internal skin (3) in the transverse direction of the tail cone.

2. Tail cone according to claim 1 wherein the internal skin (3) comprises flat walls.

3. Tail cone according to claim 2 wherein the transition between adjacent flat walls of the internal skin (3) is made through rounded corners.

4. Tail cone according to claim 2 or 3 wherein the internal skin (3) thickness is increased at the transition zone between adjacent flat walls.

5. Tail cone according to any preceding claim wherein the frames (2) are divided into sections, each section comprising a portion of the head and a portion of the foot and web of the frames (2).

6. Tail cone according to claim 5 wherein the different sections (11) of the frames (2) are separated from each other and extend between consecutive points (12) in which the external (4) and the internal skin (3) are joined.

7. Tail cone according to any preceding claim wherein it also comprises means for connecting to an auxiliary power system (9), said means being joined to the foot (7) and the web of the longitudinal structural members (1) and to the internal skin (3).

8. Tail cone according to claims 6 and 7 wherein the longitudinal structural members (1) for connecting to an auxiliary power system (9) are located in the points (12) in which the internal (3) and external (4) skin are joined.

9. Tail cone according to any preceding claim wherein the internal skin (3), the longitudinal structural members (1) and the frames (2) are an integrated structure manufactured as a single piece.

10. Aircraft, **characterised in that** it comprises a tail cone according to any preceding claim.

11. Method of manufacturing a tail cone of an aircraft, **characterised in that** it comprises the following steps:
- providing an internal skin (3),
- locating longitudinal structural members (1) on the inner face of the internal skin (3) in the longitudinal direction of the tail cone,
- locating frames (2) on the ourter face of the internal skin (3) in the transverse direction of the tail cone,
- providing afterwards an external skin (4) surrounding the frames (2), and
- attaching the external skin (4) to the frames (2) or to the internal skin (3).

12. Method according to claim 11 wherein the longitudinal structural members (1) and frames (2) and the internal skin (3) are firstly hot formed and afterwards cocured together to form an integrated structural part.

13. Method according any preceding claim 11 to 12 wherein the external skin (4) is firstly cured and afterwards is mechanically attached to the frames (2) or to the internal skin (3).

14. Method according to claim 13 wherein the external skin (4) is attached to the frames (2) or to the internal skin (3) by rivets.

15. Method according to claim 13 wherein the external skin (4) is attached to the frames (2) or to the internal skin (3) by reversible fastening means.

## Patentansprüche

1. Heckkonus eines Fluggeräts, **dadurch gekennzeichnet, dass** er aufweist:
- eine Innenhaut (3),
- eine Außenhaut (4), die die Innenhaut (3) umgibt,
- Längsstrukturelemente (1), die auf der Innenseite der Innenhaut (3) in der Längsrichtung des Heckkonus angeordnet sind, und
- Rahmen (2), die zwischen der Außenhaut (4) und der Innenhaut (3) in der Querrichtung des Heckkonus angeordnet sind.

2. Heckkonus nach Anspruch 1, wobei die Innenhaut (3) flache Wände aufweist.

3. Heckkonus nach Anspruch 2, wobei der Übergang zwischen benachbarten flachen Wänden der Innenhaut (3) durch abgerundete Ecken hergestellt ist.

4. Heckkonus nach Anspruch 2 oder 3, wobei die Dicke der Innenhaut (3) an der Übergangszone zwischen benachbarten flachen Wänden vergrößert ist.

5. Heckkonus nach einem der vorhergehenden Ansprüche, wobei die Rahmen (2) in Abschnitte unterteilt sind, wobei jeder Abschnitt einen Teil des Kopfs und einen Teil des Fußes und des Stegs der Rahmen (2) aufweist.

6. Heckkonus nach Anspruch 5, wobei die verschiedenen Abschnitte (11) der Rahmen (2) voneinander getrennt sind und sich zwischen aufeinanderfolgenden Punkten (12) erstrecken, in denen die Außen- (4) und die Innenhaut (3) verbunden sind.

7. Heckkonus nach einem der vorhergehenden Ansprüche, wobei er auch eine Einrichtung zum Verbinden mit einem Hilfsenergiesystem (9) aufweist, wobei die Eirichtung mit dem Fuß (7) und dem Steg der Längsstrukturelemente (1) und mit der Innenhaut (3) verbunden ist.

8. Heckkonus nach den Ansprüchen 6 und 7, wobei die Längsstrukturelemente (1) zum Verbinden mit einem Hilfsenergiesystem (9) in den Punkten (12) angeordnet sind, in denen die Innen- (3) und die Außenhaut (4) verbunden sind.

9. Heckkonus nach einem der vorhergehenden Ansprüche, wobei die Innenhaut (3), die Längsstrukturelemente (1) und die Rahmen (2) eine integrierte Struktur sind, die in einem einzigen Stück hergestellt ist.

10. Fluggerät, **dadurch gekennzeichnet, dass** es einen Heckkonus nach einem der vorhergehenden Ansprüche aufweist.

11. Verfahren zur Herstellung eines Heckkonus eines Fluggeräts, **dadurch gekennzeichnet, dass** es die folgenden Schritte aufweist:
- Bereitstellen einer Innenhaut (3),
- Anordnen von Längsstrukturelementen (1) auf der Innenseite der Innenhaut (3) in der Längsrichtung des Heckkonus,
- Anordnen von Rahmen (2) auf der Außenseite der Innenhaut (3) in der Querrichtung des Heckkonus,
- danach Bereitstellen einer Außenhaut (4), die die Rahmen (2) umgibt, und
- Befestigen der Außenhaut (4) an den Rahmen (2) oder der Innenhaut (3).

12. Verfahren nach Anspruch 11, wobei die Längsstrukturelemente (1) und Rahmen (2) und die Innenhaut (3) zuerst warmgeformt werden und danach gemeinsam gehärtet werden, um einen integrierten Strukturteil zu bilden.

13. Verfahren nach einem der vorhergehenden Ansprüche 11 bis 12, wobei die Außenhaut (4) zuerst gehärtet wird und danach an den Rahmen (2) oder an der Innenhaut (3) mechanisch befestigt wird.

14. Verfahren nach Anspruch 13, wobei die Außenhaut (4) durch Niete an den Rahmen (2) oder an der Innenhaut (3) befestigt wird.

15. Verfahren nach Anspruch 13, wobei die Außenhaut (4) durch lösbare Befestigungseinrichtungen an den Rahmen (2) oder der Innenhaut (3) befestigt ist.

## Revendications

1. Cône arrière d'un aéronef **caractérisé en ce qu'**il comprend :
- un revêtement interne (3),
- un revêtement externe (4) qui entoure le revêtement interne (3),
- des éléments structuraux longitudinaux (1) situés sur la face intérieure du revêtement interne (3) dans la direction longitudinale du cône arrière, et
- des cadres (2) situés entre le revêtement externe (4) et le revêtement interne (3) dans la direction transversale du cône arrière.

2. Cône arrière selon la revendication 1, dans lequel le revêtement interne (3) comprend des parois plates.

3. Cône arrière selon la revendication 2, dans lequel la transition entre des parois plates adjacentes du revêtement interne (3) est réalisée par des coins arrondis.

4. Cône arrière selon la revendication 2 ou 3, dans lequel l'épaisseur du revêtement interne (3) augmente au niveau de la zone de transition entre des parois plates adjacentes.

5. Cône arrière selon l'une des revendications précédentes, dans lequel les cadres (2) sont divisés en sections, chaque section comprenant une partie de la tête et une partie du pied et de l'âme des cadres (2).

6. Cône arrière selon la revendication 5, dans lequel les différentes sections (11) des cadres (2) sont séparées les unes des autres et s'étendent entre des points consécutifs (12) où les revêtements externe (4) et interne (3) sont reliés.

7. Cône arrière selon l'une des revendications précédentes, comprenant également des moyens de connexion à un système d'alimentation auxiliaire (9), lesdits moyens étant reliés au pied (7) et à l'âme des éléments structuraux longitudinaux (1) et au revêtement interne (3).

8. Cône arrière selon les revendications 6 et 7, dans lequel les éléments structuraux longitudinaux (1) pour la connexion à un système d'alimentation auxiliaire (9) sont situés dans les points (12) où les revêtements interne (3) et externe (4) sont reliés.

9. Cône arrière selon l'une des revendications précédentes, dans lequel le revêtement interne (3), les éléments structuraux longitudinaux (1) et les cadres (2) sont une structure intégrée fabriquée en une seule pièce.

10. Aéronef, **caractérisé en ce qu'**il comprend un cône arrière selon l'une des revendications précédentes.

11. Procédé de fabrication d'un cône arrière d'un aéronef, **caractérisé en ce qu'**il comprend les étapes suivantes qui consistent :
- à fournir un revêtement interne (3),
- à positionner des éléments structuraux longitudinaux (1) sur la face intérieure du revêtement interne (3) dans la direction longitudinale du cône arrière,
- à positionner les cadres (2) sur la face extérieure du revêtement interne (3) dans la direction transversale du cône arrière,
- à fournir ensuite un revêtement externe (4) entourant les cadres (2), et
- à fixer le revêtement externe (4) aux cadres (2) ou au revêtement interne (3).

12. Procédé selon la revendication 11, dans lequel les éléments structuraux longitudinaux (1) et les cadres (2) et le revêtement interne (3) sont tout d'abord formés à chaud et ensuite co-durcis ensemble pour former une partie structurale intégrée.

13. Procédé selon l'une des revendications précédentes 11 et 12, dans lequel le revêtement externe (4) est tout d'abord durci et ensuite fixé mécaniquement aux cadres (2) ou au revêtement interne (3).

14. Procédé selon la revendication 13, dans lequel le revêtement externe (4) est fixé aux cadres (2) ou au revêtement interne (3) par des rivets.

15. Procédé selon la revendication 13, dans lequel le revêtement externe (4) est fixé aux cadres (2) ou au revêtement interne (3) par des moyens de fixation réversibles.
